# EUROPEAN PATENT SPECIFICATION

(11) **EP 4 564 767 B1**
(45) Date of publication and mention of the grant of the patent: **22.07.2026**
(21) Application number: 23213206.8
(22) Date of filing: 30.11.2023
(51) Int. Cl.: H04L 41/16

(54) **METHOD FOR PROVIDING A MACHINE LEARNING MODEL TO A MOBILE TERMINAL**
VERFAHREN ZUR BEREITSTELLUNG EINES MASCHINENLERNMODELLS FÜR EIN MOBILES ENDGERÄT
PROCÉDÉ DE FOURNITURE D'UN MODÈLE D'APPRENTISSAGE AUTOMATIQUE À UN TERMINAL MOBILE

(43) Date of publication of application: 04.06.2025
(73) Proprietor: NTT DOCOMO, INC., Tokyo 100-6150 (JP)
(72) Inventor: BAKHSHI, Bahador, 80687 Munich (DE); SAMA, Malla Reddy, 80687 Munich (DE); MINOKUCHI, Atsushi, Tokyo, 100-6150 (JP); TANAKA, Itsuma, Tokyo, 100-6150 (JP)
(74) Representative: Viering, Jentschura & Partner mbB Patent- und Rechtsanwälte

(56) References cited:
- THOMAS NOVLAN ET AL: "Protocol aspects of AI/ML framework for NR air interface", vol. 3GPP RAN 2, no. Athens, GR; 20230227 - 20230303, 17 February 2023 (2023-02-17), XP052246260, Retrieved from the Internet <URL:https://www.3gpp.org/ftp/TSG_RAN/WG2_RL2/TSGR2_121/Docs/R2-2301634.zip R2-2301634.docx> [retrieved on 20230217]
- THOMAS NOVLAN ET AL: "AI/ML model transfer and LCM", vol. 3GPP RAN 2, no. Chicago, US; 20231113 - 20231117, 3 November 2023 (2023-11-03), XP052535639, Retrieved from the Internet <URL:https://www.3gpp.org/ftp/TSG_RAN/WG2_RL2/TSGR2_124/Docs/R2-2313236.zip R2-2313236.docx> [retrieved on 20231103]
- SAMSUNG ELECTRONICS CO ET AL: "[FS_AI4Media] Permanent Document v0.7", vol. SA WG4, no. e-meeting; 20230417 - 20230421, 21 April 2023 (2023-04-21), XP052474449, Retrieved from the Internet <URL:https://ftp.3gpp.org/tsg_sa/WG4_CODEC/TSGS4_123-e/Docs/S4-230648.zip S4-230648 [FS_AI4Media] PD v0.7.docx> [retrieved on 20230421]

## Description

The present disclosure relates to methods for providing a machine learning model to a mobile terminal.

In a communication system such as a 5G mobile communication system it is important to ensure that a certain service quality can be maintained. For this, various information like load, resource usage, available components, users mobility, state of components etc. may be monitored and may be taken into account when controlling the communication system, e.g. take measures when overload is imminent, to avoid a drop of service quality, etc. Gathering and/or evaluating this information can be done using machine learning models trained accordingly for corresponding prediction tasks. For example, using artificial intelligence (AI) and machine learning (ML) techniques is a promising approach to improve the performance of NG-RAN (next generation radio access network) air interface which in some use cases such as Channel Status Information (CSI) feedback enhancement, beam management optimization and positioning accuracy enhancement. However, this requires, at least in some cases, that machine learning models are used on the terminal side but, due to the effort required for training, model training on the terminal side being challenging (because of constrained power and computational resources), model training should typically be offloaded to the network, i.e. models should be trained on the network side (e.g. a network function or application function) and provided to mobile terminals when they need it. Accordingly, efficient approaches for providing machine learning models to mobile terminals of mobile communication systems are desirable.

The publication Thomas Novlan et al. "Protocol aspects of AI/ML framework for NR air interface", 3GPP Draft; R2-2301634; Type Discussion, 3rd Generation Partnership Project (3GPP), Mobile Competence Centre 650, Route des Lucioles; F-06921 Sophia-Antipolis Cedex; France, vol. 3GPP RAN 2, no. Athens, GR; 20230772- 20230303, 17 February 2023, discloses that the selection of user plane or control plane methods for delivery of an AI(artificial intelligence)/ML(machine learning) model may depend on the size of the model, and the underlying architecture used for model training, testing, and deployment may influence which procedure is most suitable for model delivery and subsequent updates.

The publication Thomas Novlan et al. "AI/ML model transfer and LCM", 3GPP Draft; R2-2313236; Type Discussion, 3rd Generation Partnership Project (3GPP), Mobile Competence Centre 650, Route des Lucioles; F-06921 Sophia-Antipolis Cedex; France, vol. 3GPP RAN 2, no. Chicago, US; 20231113- 20231117, 3 November 2023, discusses various AI/ML model transfer solutions which involve different network components.

A method for providing a machine learning model to a mobile terminal of a mobile communication system according to claim 1 is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system according to an embodiment.
- Figure 2: shows a flow diagram 200 illustrating an ML (machine learning) model retrieval procedure (on the network side).
- Figure 3: shows a flow diagram illustrating an embodiment where the ML model is provided from a UPF (User Plane Function) to a mobile terminal via a PDU (Packet Data Unit) session between the mobile terminal and the UPF.
- Figure 4: shows a flow diagram illustrating an embodiment where the ML model is provided from an NEF (Network Exposure Function) to a mobile terminal via a PDU session between the mobile terminal and a UPF and a UP (User Plane) tunnel between the UPF and the NEF.
- Figure 5: shows a flow diagram illustrating an embodiment where the ML model is provided from an MTF (Model Training (Network) Function) or an MRF (Model Repository (Network) Function) via user plane tunnel to a UPF and from there via a PDU session to a mobile terminal.
- Figure 6: illustrates an AF(Application Function)-based approach for providing an ML model to a mobile terminal.
- Figure 7: shows a flow diagram illustrating an example of a procedure for an AF-based approach as illustrated in figure 6.
- Figure 8: shows a flow diagram illustrating a method for providing a machine learning model to a mobile terminal of a mobile communication system according to an embodiment.
- Figure 9: shows a flow diagram illustrating a method acquiring a machine learning model from a mobile communication system according to an embodiment.

According to further embodiments, a computer program and a computer readable medium comprising instructions, which, when executed by a computer, make the computer perform the method according to claim 1 are provided.

In the following, various examples will be described in more detail.

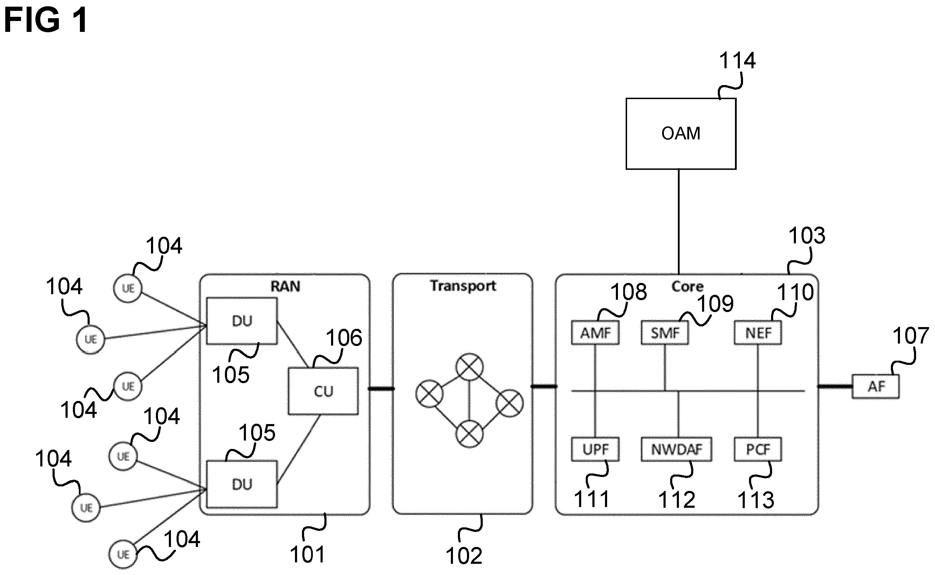

Figure 1 shows a communication system according to an embodiment.

The communication system comprises, in this example, a radio access network (RAN) 101, a core network 103 and a transport (communication) network 102 connecting the RAN 101 to the core network 103. Subscriber terminals (denoted as UEs according to 3GPP) 104 are connected to distributed units 105 of the RAN 101 which are connected to a centralized unit 106 (to implement base stations of the RAN 101). An application function 107 is connected to the core network 103. The core network 103, e.g. a 5G core network (5GC) comprises various network functions (NFs) like an AMF (Access and Mobility Management Function) 108, an SMF (Session Management Function) 109, an NEF (Network Exposure Function) 110, a UPF (User Plane Function) 111, an NWDAF (Network Data Analytics Function) 112 and a PCF (Policy Control Function) 113.

The core network 103 is coupled to an OAM (Operation, Administration and Maintenance) system 114.

In a communication system like illustrated in figure 1, machine learning (ML) models may be used for carrying out prediction tasks for various purposes such as
- CSI (channel state information) feedback enhancement, e.g., overhead reduction, improved accuracy, prediction
   o spatial-frequency domain CSI compression using two-sided AI model
   o time domain CSI prediction using UE sided model
   • Beam management, e.g., beam prediction in time, and/or spatial domain for overhead and latency reduction, beam selection accuracy improvement, for example
      o spatial-domain downlink beam prediction for a first set A of beams based on measurement results of a second set of beams
      o temporal downlink beam prediction for a first set of beams based on the historic measurement results of a second set of beams
   • Positioning accuracy enhancements for different scenarios including, e.g., those with heavy NLOS (non-line of sight) conditions
      o direct AI/ML positioning
      o AI/ML-assisted positioning

to optimize the performance of radio link between the subscriber terminals 104 and RAN 101. Additionally, AI/ML techniques such as
   - Network Energy Saving, e.g. an ML model is used with
      o input: UE mobility/trajectory, Current Energy efficiency, UE measurement report, ...
      o output: predicted energy efficiency, Handover strategy, ...
   - Load Balancing, e.g. an ML model is used with
      o input: UE trajectory, UE traffic, RAN resource status, ...
      o output: predicted own resource status information, ...
   - Mobility Optimization, e.g. an ML model is used with
      o input: UE location information, Radio measurements, UE handovers, ...
      o output: predicted handover, UE traffic prediction, ...
can be used in particular for example for improving RAN performance.

For one of the above purposes, a corresponding ML model may be trained by an entity, e.g. RAN entity, in particular a base station (denoted as gNB in 5G), OAM 114, a component (e.g. network function) of the core network 103 or also a third party (e.g. corresponding to AF 107 or connected to the core network 103 via AF 107). This training entity is in the following referred to as Model Training NF (MTF). It is capable of training ML models using training data gathered from other NFs, UEs, OAM etc. The MTF can for example be the NWDAF 112 containing a MTLF (Model Training Logical Function) with the extensions of supporting training models for RAN use-cases (e.g., CSI prediction model) providing models to other NFs than AnLF (Analytical Logical Function) such as AMF, UPF, SMF. The model training entity or MTF gathers training data and trains the respective ML model. The trained model (i.e. a specification of the trained model, e.g. in terms of neural network weights) is then stored in a storage which is in the following referred to as Model Repository NF (MRF) capable of storing the trained models and providing the models to other components and entities (e.g. NFs). The MRF is for example an ADRF (Analytics Data Repository Function) with the capability to provide stored models to NFs other than AnLF such as AMF, UPF and SMF.

A trained model may then be used in multiple inference locations. This may in particular include one or more mobile terminals. Therefore, according to various embodiments, approaches for delivering ML models from the network side, e.g. RAN, 5GC, OAM, or a third party or AF to the UE (via RAN) are provided.

According to various embodiments, model delivery is enabled by extending interfaces in UE and 5GC NFs for model delivery in UP (user plane). It should be noted that training locations inside and outside of the core network 103 (e.g. 5GC) are supported. The ML model may in particular be a RAN model, i.e. a ML model trained for RAN tasks, i.e. for performing prediction related to RAN operation.

For the embodiments described in the following, it is assumed that there are registration and discovery procedures where an MTF registers the supported models in an NRF (network repository function) with associated ML Model Filter information and other NFs discover and select the MTF via inquiring NRF for the specific model and corresponding filters.

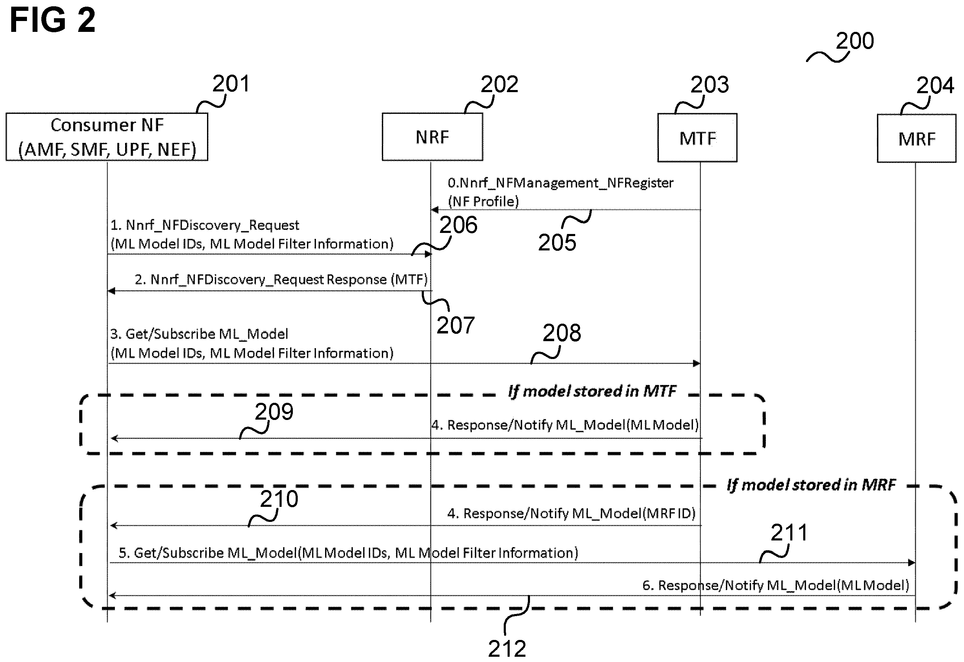

Figure 2 shows a flow diagram 200 illustrating an ML model retrieval procedure (on the network side).

A consumer NF 201 (i.e. a NF (network function) which acts as consumer, i.e. retrieves a trained ML model) such as an AMF, SMF, UPF or NEF, an NRF 202, an MTF 203 and an MRF 204 are involved in the flow.

In 205, the MTF 203 registers with the NRF 202 informing the NRF 202 in particular that the MTF 203 has ML model training and provisioning capability.

In 206, the consumer NF 201 sends a discovery request to the NRF 202 to which the NRF 202 responds in 207 with a discovery request response informing the consumer NF 201 about the MTF 203.

In 208, the consumer NF 201 requests an ML model from the MTF (by means of a get or a subscribe). The request may include various parameters regarding the requested model. In particular, in case the ML model is to be used on the terminal (UE) side, the request may include information about the UE type, the UE vendor and the UE location.

If the requested ML model is stored in the MTF 203, the MTF 203 provides the requested model to the consumer NF 201 in 209.

If the requested ML model is not stored in the MTF 203 but in the MRF 204, the MTF 203 informs the consumer NF 201 about an identification of the MRF 204 in 210, the consumer NF 201 requests the ML model from the MRF in 211 and the MRF provides the requested ML model in 212.

Both the terminal and the network should be capable of ML model delivery from the network to the terminal; i.e., the terminal should be capable of requesting and accepting model from the network. The network should also be capable of training and delivery models to the terminal. A mobile terminal may inform the network about its capabilities and characteristics regarding ML models, e.g.
- UE Model Provisioning Capability (i.e., the UE has the capability to get AIML models from the network (e.g. 5G communication system (5GS))
- List of supported ML Models (e.g., ML model for CSI etc.)
- User device information (e.g., UE type, vendor, hardware, ...)

The mobile terminal may provide the information about its capabilities and characteristics for example as part of UE capability transfer (i.e. with a UECapabilityInformation message to the network in response to a UECapabilityEnquiry message from the network) or in its registration request (that it sends to the RAN for registering in the network).

The network may perform Network ML Model Provisioning Capability Advertisement, i.e. inform UEs with its capabilities regarding ML model provisioning through system information, e.g. a SystemInformation message (e.g. in response to a SystemInformationRequest), for example in a system information block (SIB). The network may for example provide the following system information:
- Network Model Provisioning Capability (i.e., the network has the capability to provide ML models to the UE)
- List of supported ML Models (e.g., ML model for CSI)

In the following, embodiments where an ML model is provided from the network side to a mobile terminal via user plane communication.

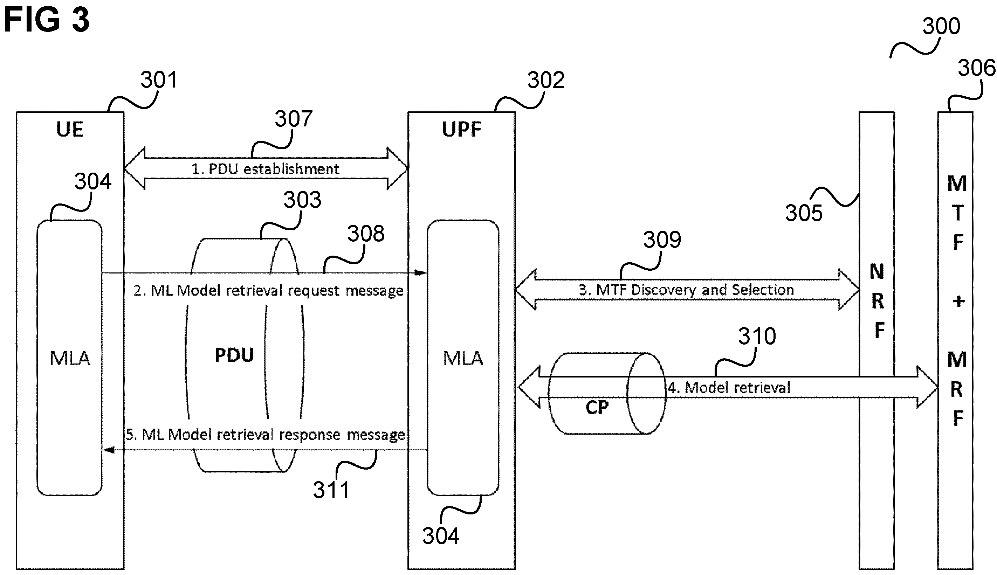

Figure 3 shows a flow diagram 300 illustrating an embodiment where the ML model is provided from a UPF 302 to a mobile terminal 301 via a PDU session 303 between the mobile terminal 301 and the UPF 302.

The UE 301 and the UPF 302 each comprise a respective ML Agent (MLA) 304. The ML Agent 304 are entities similar to a PMF (Performance Measurement Functionality). A PMF may be used by a mobile terminal to obtain access performance measurements over the user-plane. Similarly, the MLAs 304 allow data, i.e., the ML models, exchange between UE and UPF in the user plane.

Further, an NRF 305 and an MTF or MRF 306 are involved in the flow.

In 307, the UE 301 establishes the PDU session 303 with the UPF 302.

In 308, the mobile terminal 301 requests an ML model from the UPF 302. The request includes ML model information, which may for example be ML model provisioning content according to 3GPP, e.g.
- a list of Analytics ID(s): identifies the analytics for which the ML model is used
- use case context: indicates the context of use of the analytics to select the most relevant ML model.
- ML Model Interoperability Information
- ML Model Target Period
- Accuracy level(s) of Interest
- Time when model is needed

Further, according to various embodiments, the ML model information is extended with the indication that the request model should support that a UE is the ultimate model consumer (i.e. that the ML model may be used on the terminal side).

In 309, the UPF 302 performs MTF discovery and selection followed by ML model retrieval in 310 (e.g. as described with reference to figure 2). The ML model retrieval from the MTF or the MRF 306 (depending on where the model is stored) is performed via control plane.

In 311, the UPF 302 provides the requested ML model (i.e. a specification of the trained model, e.g. in terms of neural network weights) to the mobile terminal 301.

The communication between mobile terminal 301 and UPF 302 in 308 and 311 is performed via the PDU session 302 and uses the MLAs 304 which enable data exchange between mobile terminal and UPF in the user plane.

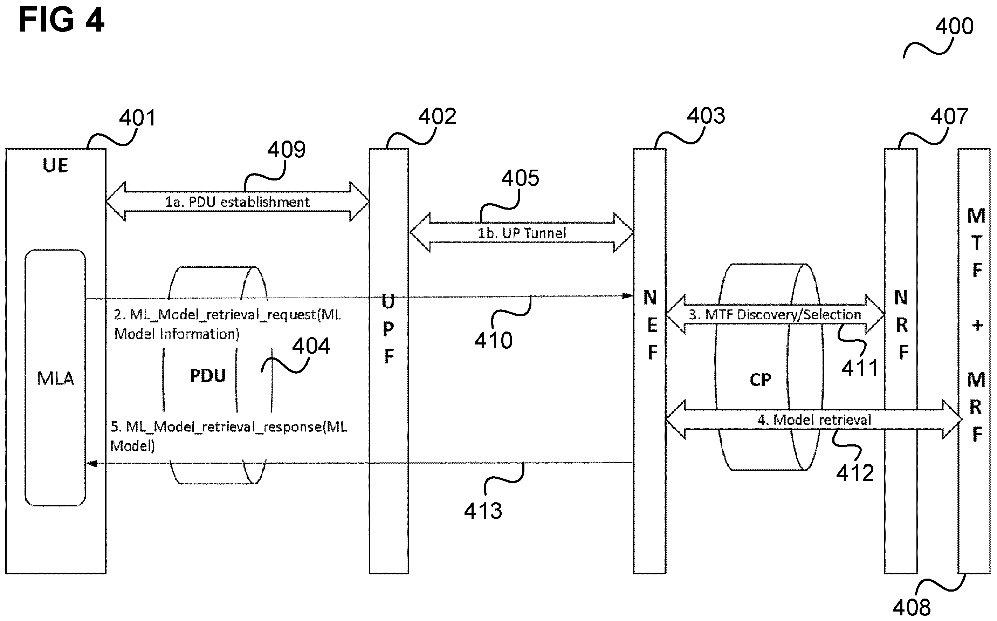

Figure 4 shows a flow diagram 400 illustrating an embodiment where the ML model is provided from an NEF 403 to a mobile terminal 401 via a PDU session 404 between the mobile terminal 401 and a UPF 402 and a UP tunnel 405 between the UPF 402 and the NEF 403.

The UE 401 may comprise an ML Agent (MLA) 406 enabling the communication with the NEF 405 via user plane.

Further, an NRF 407 and an MTF or MRF 408 are involved in the flow.

In 409, the UE 301 establishes the PDU session 404 with the UPF 302 and the UP tunnel 405.

In 410, the mobile terminal 401 requests an ML model from the NEF 403. The request includes ML model information, which may for example be ML model provisioning content according to 3GPP as described with reference to figure 3.

Further, according to various embodiments, the ML model information is extended with the indication that the request model should support that a UE is the ultimate model consumer (i.e. that the ML model may be used on the terminal side).

In 411, the NEF 403 performs MTF discovery and selection followed by ML model retrieval in 412 (e.g. as described with reference to figure 2). The ML model discovery and selection and the ML model retrieval from the MTF or the MRF 406 (depending on where the model is stored) are performed via control plane.

In 413, the NEF 403 provides the requested ML model (i.e. a specification of the trained model, e.g. in terms of neural network weights) to the mobile terminal 401.

The communication between mobile terminal 401 and NEF 402 in 410 may for example be based on an approach which allows UE to directly invoke the NEF API via the user plane tunnel 405 (e.g. according to RNAA (Resource owner-aware Northbound API Access)).

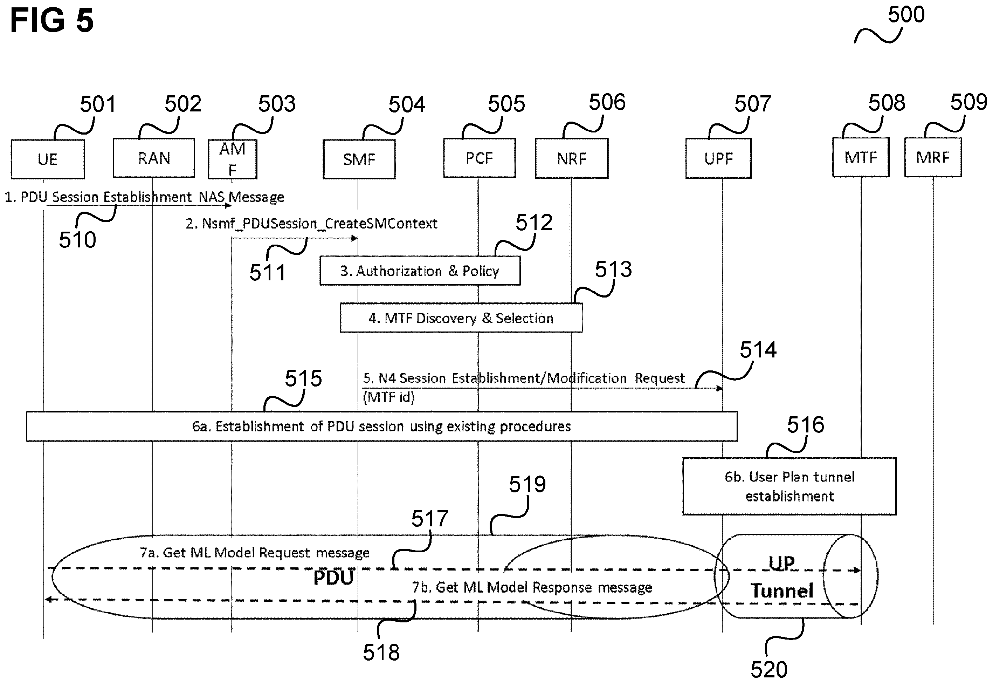

Figure 5 shows a flow diagram 500 illustrating an embodiment where the ML model is provided from an MTF 508 or an MRF 509 via user plane tunnel 519 to a UPF 507 and from there via a PDU session 520 to a mobile terminal 501.

Further, a RAN 502, an AMF 503, an SMF 504, a PCF 505, and an NRF 506 are involved in the flow.

In 510, The mobile terminal 501 sends a request from establishment of the PDU session 519 to the AMF 503 (via RAN 502). In reaction, the AMF 503 requests the SMF 504 to create a session management context in 511. The SMF 504 then, in 512, performs authentication and policy determination for the PDU session 519 with the PCF 505.

In 513, the SMF 504 performs MTF discovery and selection with the NRF 506 (e.g. as described with reference to figure 2).

In 514, the SMF 504 then sends an N4 Session Establishment/Modification Request to the UPF 507 wherein it indicates the MTF 508 which it is discovered in 515.

In 515, the PDU session 519 is established (according to normal 3GPP procedures).

In 516, the UPF establishes the UP tunnel 520 with the MTF 508. This is for example performed according to an extension of the user plane tunnel establishment on N4 interface according to 3GPP.

In 517, the mobile terminal 501 requests an ML model from the MTF 508 via the PDU session 519 and the UP tunnel 520 and the MTF 508 provides the requested ML model to the mobile terminal 501 in 518 via the PDU session 519 and the UP tunnel 520.

If the model is stored in the MRF 509 rather than the MTF 508, the MRF 509 replaces the MTF 508 in the above procedure.

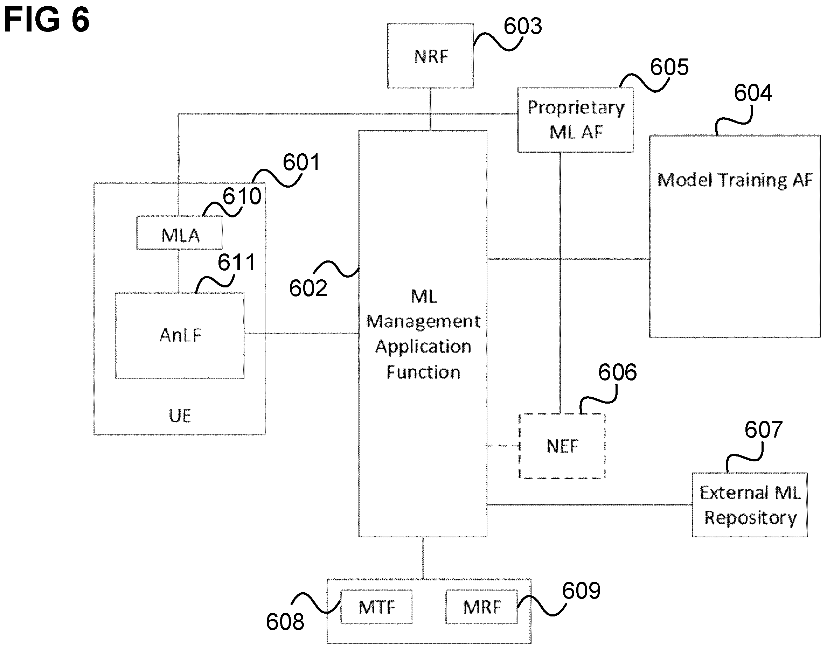

Figure 6 illustrates an AF-based approach for providing an ML model to a mobile terminal 601.

An ML management AF 602, an NRF 603, a Model Training AF 604, a proprietary ML AF 605, an NEF 606, an external ML repository 607, an MTF 608 and an MRF 609 (or at least some of them depending on where the ML model is trained and stored) are involved in the flow.

The mobile terminal 601 includes an MLA 610 and an AnLF 611. The MLA 610 is an application in the mobile terminal 601 which communicates with the (proprietary) ML AF 605. The ML 605 requests an ML model via invoking the API of the NEF 606.

The ML management AF 602 acts as a gateway to get the ML model from an ML model provider (i.e. e.g. the Model Training AF 604, the external repository 607, an OAM or the MTF 608 or MRF 609) and provide it to the mobile terminal 601. The Model Training AF 604 can train models based on available data (sample dataset, simulation, ...). The source of the ML model (e.g. the MTF 608) may be discovered using the NRF 603.

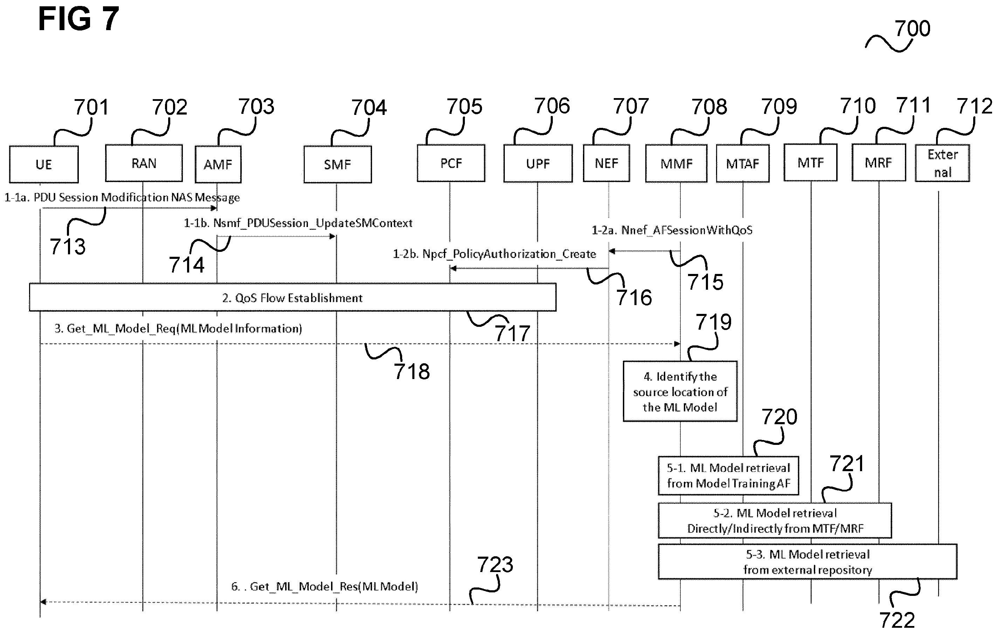

Figure 7 shows a flow diagram 700 illustrating an example of a procedure for an AF-based approach as illustrated in figure 6.

A mobile terminal 701, a RAN 702, an AMF 703, an SMF 704, a PCF 705, a UPF 706, an NEF 707, an ML management AF (MMF) 708, an ML training AF (MTAF) 709, an MTF 410, an MRF 411 and an external ML model repository 412 (or at least some of them depending on where the ML model is trained and stored) are involved in the flow.

In 713, the mobile terminal 701 transmits a PDU session modification NAS message to the AMF 703 for initiating a QoS flow in a PDU session (assumed to have been established earlier).

In 714, the AMF 703 reacts by sending a request to the request to the SMF 704 to update the SM context for the PDU session.

Alternatively, the ML management AF 708 may initiate establishment of a QoS flow (in the PDU session) by sending a corresponding request in 715 to the NEF 707. In this case, the NEF 709 in 716 transmits a Policy/Authorization Create message to the PCF 705 to trigger establishment of the QoS flow.

In 717 the QoS flow is established.

In 718, the mobile terminal 701 requests an ML model from the ML management AF 708. The request includes ML model information, which may for example be ML model provisioning content according to 3GPP as described above with reference to figure 3. Further, according to various embodiments, the ML model information is extended with the indication that the request model should support that a UE is the ultimate model consumer (i.e. that the ML model may be used on the terminal side).

In 719, the ML management AF 708 identifies the storage location of the requested ML model.

In accordance with the storage location of the requested ML model that it has identified the ML management AF 708 retrieves the requested ML model
- from the Model Training AF 709 in 720
- directly and indirectly from the MTF 710 or MRF 711 in 721 or
- from the external repository 712 in 722.

In 723, the ML management AF 708 provides the requested ML model to the mobile terminal 701.

It should be noted that all request messages (for requesting an ML model) and response messages (for providing the ML model) in the above examples can be implemented as subscribe and notify message pairs. This enables ML model delivery triggered by the network, where the mobile terminal subscribes for a specific model and then the network e.g. taking into account operator's policy, ML Model performance monitoring, mobile terminal mobility/handover etc. provides customized/updated versions of the model.

It should further be noted that the various approaches for ML model provisioning are not exclusive but multiple approaches can be implemented and used according to the operator's policy, mobile terminal configuration etc.

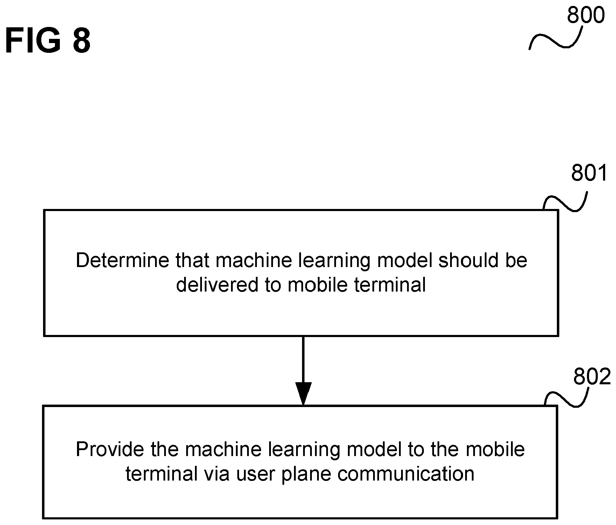

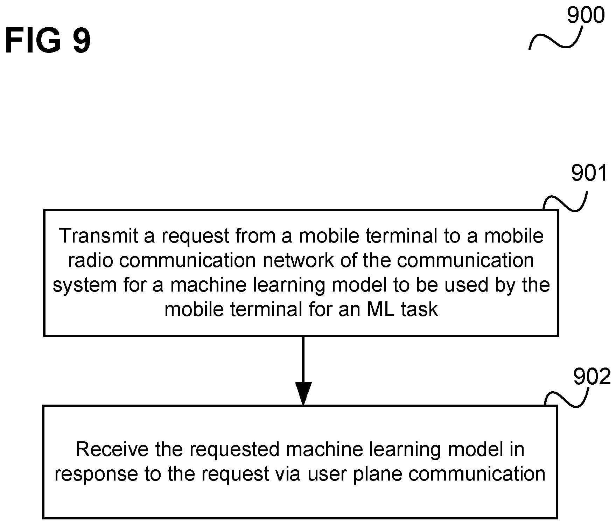

In summary, according to various embodiments, methods are provided as illustrated in figures 8 and 9.

Figure 8 shows a flow diagram 800 illustrating a method for providing a machine learning model to a mobile terminal of a mobile communication system according to an embodiment.

In 801, a mobile radio communication network of the communication system a determines that a machine learning model should be delivered to a mobile terminal to be used by the mobile terminal for a machine learning task (e.g. inference, e.g. a prediction task, for example a prediction task for controlling radio access network operation or compression or encoding of data (e.g. as an autoencoder)). For example, this is determined in response of receiving a request from the mobile terminal for the machine learning model. The request may also be a subscription (i.e. a subscribe message) to a corresponding model provision service.

In 802, the mobile radio communication network provides the machine learning model to the mobile terminal via user plane communication (in reaction to the determination that the machine learning model should be delivered to the mobile terminal).

According to various embodiments, a communication network is provided configured to perform the method described with reference to figure 8.

The communication network for example corresponds to the RAN 101, the transport network 102 and/or the core network 103 of the communication system of figure 1.

Figure 9 shows a flow diagram 900 illustrating a method acquiring a machine learning model from a mobile communication system according to an embodiment.

In 901, a mobile terminal transmits a request to a mobile radio communication network of the communication system for a machine learning model to be used by the mobile terminal for an ML task.

In 902, the mobile terminal receives the requested machine learning model in response to the request via user plane communication.

The request may include an indication that the machine learning model is requested for a machine learning task in the mobile terminal.

According to various embodiments, a mobile terminal is provided configured to perform the method described with reference to figure 9.

The mobile terminal for example corresponds to one of the UEs 104 of the communication system of figure 1.

According to various embodiments, in other words, a ML model is provided to a mobile terminal via the user plane. This for example enables using ML models on the terminal side for communication optimization, e.g. the air interface.

As described above, various variants are possible which gives a flexible set approaches.

Providing the machine learning model via user plane communication may be understood as transmitting a specification of the machine learning models, i.e. the values of the trained parameters of the machine learning model (such as neural network weights in case that the machine learning model is a neural network) via user plane communication from the network side (i.e. the mobile radio communication network) to the mobile terminal (i.e. over the air interface), i.e. using a communication channel, interface and/or reference point belonging to user plane (of the mobile communication system).

The communication network and the mobile terminal comprise and/or are implemented by data processing components like one or more processors, memories, interfaces, receivers, transmitters, antennas etc. and may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A method for providing a machine learning model to a mobile terminal (104, 301, 401, 501, 601, 701) of a mobile communication system, comprising:
Determining (801), by a mobile radio communication network of the communication system, that a machine learning model should be delivered to a mobile terminal (104, 301, 401, 501, 601, 701) to be used by the mobile terminal (104, 301, 401, 501, 601, 701) for a machine learning task in reaction to receiving, by the mobile radio communication network, a request from the mobile terminal (104, 301, 401, 501, 601, 701) for the machine learning model, comprising receiving the request in a User Plane Function (111, 302, 402, 507, 706) of the radio communication network; and
and
Providing (802) the machine learning model to the mobile terminal (104, 301, 401, 501, 601, 701) via user plane communication in response to the request by the User Plane Function (111, 302, 402, 507, 706) discovering a storage location of the machine learning model, retrieving the machine learning model from the discovered storage location and providing the machine learning model to the mobile terminal (104, 301, 401, 501, 601, 701). or
forwarding the request to a Network Exposure Function (110, 403, 606, 707) of the radio communication network via a user plane tunnel and the Network Exposure Function (110, 403, 606, 707) discovering a storage location of the machine learning model, retrieving the machine learning model from the discovered storage location and providing the machine learning model to the mobile terminal (104, 301, 401, 501, 601, 701) via the User Plane Function (111, 302, 402, 507, 706).

2. The method of claim 1, comprising determining that the machine learning model should be delivered to the mobile terminal (104, 301, 401, 501, 601, 701) based on one or more of temporal and/or spatial changes of operational conditions, machine learning model performance degradation, a configuration of the mobile terminal (104, 301, 401, 501, 601, 701) and an operator policy of the mobile communication network.

3. The method of claim 1 or 2, comprising receiving the request by a User Plane Function (111, 302, 402, 507, 706) of the communication network.

4. The method of any one of claims 1 to 3, comprising providing the machine learning model to the mobile terminal (104, 301, 401, 501, 601, 701) via a Packed Data Unit session (303, 404).

5. The method of any one of claims 1 to 4, comprising receiving the request via a Packet Data Unit session (303, 404) and providing the machine learning model to the mobile terminal (104, 301, 401, 501, 601, 701) via the Packed Data Unit session (303, 404) or another Packet Data Unit session (303, 404).

6. The method of any one of claims 1 to 5, comprising receiving the request by a core network component of the radio communication network via a user plane tunnel (405).

7. A communication network configured to perform the method of any one of claims 1 to 6.

## Patentansprüche

1. Ein Verfahren zur Bereitstellung eines maschinellen Lernmodells an ein mobiles Endgerät (104, 301, 401, 501, 601, 701) eines Mobilkommunikationssystems, aufweisend: Bestimmen (801), durch ein Mobilfunkkommunikationsnetz des Kommunikationssystems, dass ein maschinelles Lernmodell an ein mobiles Endgerät (104, 301, 401, 501, 601, 701) geliefert werden soll, um durch das mobile Endgerät (104, 301, 401, 501, 601, 701) für eine maschinelle Lernaufgabe verwendet zu werden, als Reaktion auf den Empfang, durch das Mobilfunkkommunikationsnetz, einer Anfrage des mobilen Endgeräts (104, 301, 401, 501, 601, 701) nach dem maschinellen Lernmodell, aufweisend
Empfangen der Anfrage in einer Nutzerebenen-Funktion (111, 302, 402, 507, 706) des Funkkommunikationsnetzes; und
Bereitstellen (802) des maschinellen Lernmodells an das mobile Endgerät (104, 301, 401, 501, 601, 701) über eine Nutzerebenen-Kommunikation als Reaktion auf die Anfrage durch
die Nutzerebenen-Funktion (111, 302, 402, 507, 706), die einen Speicherort des maschinellen Lernmodells ermittelt, das maschinelle Lernmodell vom ermittelten Speicherort abruft und das maschinelle Lernmodell an das mobile Endgerät (104, 301, 401, 501, 601, 701) bereitstellt,
oder
Weiterleiten der Anfrage an eine Netzwerk-Expositionsfunktion (110, 403, 606, 707) des Funkkommunikationsnetzes über einen Nutzerebenen-Tunnel und die Netzwerk-Expositionsfunktion (110, 403, 606, 707) ermittelt einen Speicherort des maschinellen Lernmodells, ruft das maschinelle Lernmodell vom ermittelten Speicherort ab und stellt das maschinelle Lernmodell an das mobile Endgerät (104, 301, 401, 501, 601, 701) über die Nutzerebenen-Funktion (111, 302, 402, 507, 706) bereit.

2. Das Verfahren nach Anspruch 1, aufweisend das Bestimmen, dass das maschinelle Lernmodell an das mobile Endgerät (104, 301, 401, 501, 601, 701) geliefert werden soll, basierend auf einem oder mehreren zeitlichen und/oder räumlichen Änderungen der Betriebsbedingungen, einer Leistungsverschlechterung des maschinellen Lernmodells, einer Konfiguration des mobilen Endgeräts (104, 301, 401, 501, 601, 701) und einer Betreiber-Richtlinie des Mobilkommunikationsnetzes.

3. Das Verfahren nach Anspruch 1 oder 2, aufweisend den Empfang der Anfrage durch eine Nutzerebenen-Funktion (111, 302, 402, 507, 706) des Kommunikationsnetzes.

4. Das Verfahren nach einem der Ansprüche 1 bis 3, aufweisend die Bereitstellung des maschinellen Lernmodells an das mobile Endgerät (104, 301, 401, 501, 601, 701) über eine Paketdateneinheit-Sitzung (303, 404).

5. Das Verfahren nach einem der Ansprüche 1 bis 4, aufweisend den Empfang der Anfrage über eine Paketdateneinheit-Sitzung (303, 404) und die Bereitstellung des maschinellen Lernmodells an das mobile Endgerät (104, 301, 401, 501, 601, 701) über die Paketdateneinheit-Sitzung (303, 404) oder eine andere Paketdateneinheit-Sitzung (303, 404).

6. Das Verfahren nach einem der Ansprüche 1 bis 5, aufweisend das Empfangen der Anfrage durch eine Kernnetzkomponente des Funkkommunikationsnetzes über einen Nutzerebenen-Tunnel (405).

7. Ein Kommunikationsnetz, das dazu eingerichtet ist, das Verfahren nach einem der Ansprüche 1 bis 6 durchzuführen.

## Revendications

1. Procédé pour fournir un modèle d'apprentissage automatique à un terminal mobile (104, 301, 401, 501, 601, 701) d'un système de communication mobile, comprenant :
la détermination (801), par un réseau de radiocommunication mobile du système de communication, du fait qu'un modèle d'apprentissage automatique doit être fourni à un terminal mobile (104, 301, 401, 501, 601, 701) afin d'être utilisé par le terminal mobile (104, 301, 401, 501, 601, 701) pour une tâche d'apprentissage automatique, en réponse à la réception, par le réseau de radiocommunication mobile, d'une demande provenant du terminal mobile (104, 301, 401, 501, 601, 701) concernant le modèle d'apprentissage automatique, comprenant la réception de la demande dans une fonction de plan utilisateur (111, 302, 402, 507, 706) du réseau de radiocommunication ; et
la fourniture (802) du modèle d'apprentissage automatique au terminal mobile (104, 301, 401, 501, 601, 701) via une communication de plan utilisateur en réponse à la demande par
la fonction de plan utilisateur (111, 302, 402, 507, 706) découvrant un emplacement de stockage du modèle d'apprentissage automatique, récupérant le modèle d'apprentissage automatique à partir de l'emplacement de stockage découvert et fournissant le modèle d'apprentissage automatique au terminal mobile (104, 301, 401, 501, 601, 701),
ou
la transmission de la demande à une fonction d'exposition de réseau (110, 403, 606, 707) du réseau de radiocommunication via un tunnel de plan utilisateur et la fonction d'exposition de réseau (110, 403, 606, 707) découvrant un emplacement de stockage du modèle d'apprentissage automatique, récupérant le modèle d'apprentissage automatique à partir de l'emplacement de stockage découvert et fournissant le modèle d'apprentissage automatique au terminal mobile (104, 301, 401, 501, 601, 701) via la fonction de plan utilisateur (111, 302, 402, 507, 706).

2. Procédé selon la revendication 1, comprenant la détermination du fait que le modèle d'apprentissage automatique doit être fourni au terminal mobile (104, 301, 401, 501, 601, 701) sur la base d'un ou de plusieurs parmi des changements temporels et/ou spatiaux de conditions de fonctionnement, une dégradation des performances du modèle d'apprentissage automatique, une configuration du terminal mobile (104, 301, 401, 501, 601, 701) et une politique d'opérateur du réseau de communication mobile.

3. Procédé selon la revendication 1 ou 2, comprenant la réception de la demande par une fonction de plan utilisateur (111, 302, 402, 507, 706) du réseau de communication.

4. Procédé selon l'une quelconque des revendications 1 à 3, comprenant la fourniture du modèle d'apprentissage automatique au terminal mobile (104, 301, 401, 501, 601, 701) via une session d'unité de données en paquets (303, 404).

5. Procédé selon l'une quelconque des revendications 1 à 4, comprenant la réception de la demande via une session d'unité de données en paquets (303, 404) et la fourniture du modèle d'apprentissage automatique au terminal mobile (104, 301, 401, 501, 601, 701) via la session d'unité de données en paquets (303, 404) ou une autre session d'unité de données en paquets (303, 404).

6. Procédé selon l'une quelconque des revendications 1 à 5, comprenant la réception de la demande par un composant de réseau central du réseau de radiocommunication via un tunnel de plan utilisateur (405).

7. Réseau de communication configuré pour mettre en œuvre le procédé selon l'une quelconque des revendications 1 à 6.
